# EUROPÄISCHE PATENTANMELDUNG

(11) **EP 4 635 908 A1**
(43) Veröffentlichungstag der Anmeldung: **22.10.2025**
(21) Anmeldenummer: 24020118.6
(22) Anmeldetag: 16.04.2024
(51) Int. Cl.: C01B 3/50, B01D 53/22, C01B 3/04, B01D 53/047, C01B 3/56

(54) **VERFAHREN UND ANLAGE ZUR GEWINNUNG EINES WASSERSTOFFPRODUKTS UNTER VERWENDUNG VON AMMONIAK**

(71) Anmelder: Linde GmbH, 82049 Pullach (DE)
(72) Erfinder: Bauer, Martin, 82049 Pullach (DE); Bohn, Jan-Peter, 82049 Pullach (DE); Reinke, Michael, 82049 Pullach (DE); Schiffmann, Patrick, 82049 Pullach (DE)
(74) Vertreter: Fischer, Werner

(57) **Zusammenfassung**

Ein Verfahren zur Gewinnung eines Wasserstoffprodukts wird vorgeschlagen. Dieses nutzt eine elektrisch beheizte, mit Ammoniak gespeiste katalytische Reaktoranordnung zur Bereitstellung eines Spaltgases aus Wasserstoff und Stickstoff. Durch Druckwechseladsorption wird dieses Gemisch getrennt, wobei ein Restgas einer Membrantrennung unterworfen wird. Aus der Membrantrennung kann ein wasserstoffhaltiges Gas entnommen und einer weiteren Behandlung unterworfen werden, wodurch ein Rückführstrom gebildet wird. Eine Anlage zur Durchführung eines entsprechenden Verfahrens wird ebenfalls vorgeschlagen.

## Beschreibung

### Gebiet

Die vorliegende Offenbarung betrifft ein Verfahren zur Gewinnung eines Wasserstoffprodukts unter Verwendung von Ammoniak und eine Anlage zur Durchführung des Verfahrens.

### Hintergrund

Wasserstoff stellt eine Alternative zu fossilen Brennstoffen dar, da Wasserstoff ohne Freisetzung schädlicher Emissionen umweltfreundlich verbrennt. Allerdings ist die Speicherung und Handhabung von Wasserstoff aufgrund der niedrigen Verflüssigungstemperatur und der besonders leichten Entflammbarkeit eine Herausforderung, die seinen universellen Einsatz erschwert. Für den Wasserstofftransport konzentriert sich die Forschung daher auf stabile Moleküle zur Bindung von Wasserstoff, wobei Ammoniak, Methanol, Dimethylether, Methylbenzen und Methansäure als vielversprechend gelten.

Besonders Ammoniak stellt als kohlenstofffreies Molekül eine vorteilhafte Speicherform für Wasserstoff dar. Die Handhabung von Ammoniak, insbesondere für die Düngemittelproduktion, ist erprobt und sicher. Die Herstellung erfolgt traditionell über das Haber-Bosch-Verfahren unter Verwendung von adiabaten Reaktoren. Die katalytische Spaltung von Ammoniak wird herkömmlicherweise mittels befeuerter Spaltreaktoren durchgeführt. Die Produkte der Ammoniakspaltung werden dabei in einem als Spaltgas bezeichneten Gemisch erhalten, das zu einem großen Teil aus Wasserstoff und Stickstoff besteht, daneben aber auch nicht umgesetztes Ammoniak sowie evtl. Wasser enthält, das bereits in dem Ammoniak enthaltenden Einsatzstoff vorliegt bzw. zusätzlich als Temperaturmoderator in die Spaltreaktor eingeleitet wird, jedoch nicht an der Spaltreaktion teilnimmt.

Zur Gewinnung des Wasserstoffs wird das Spaltgas einer Trenneinrichtung zugeführt, in der es nach der Entfernung des überwiegenden Teils des nicht umgesetzten Ammoniaks und der Abtrennung von enthaltenem Wasser vorzugsweise durch Druckwechseladsorption (PSA) behandelt wird, wobei eine weitgehend stickstofffreie Wasserstofffraktion sowie ein zum Großteil aus Stickstoff bestehendes und Ammoniak enthaltendes Restgas erzeugt werden. Während die Wasserstofffraktion als Produkt abgegeben werden kann, wird das Restgas zurückgeführt und zur Befeuerung des Spaltreaktors verbrannt.

In den letzten Jahren werden verstärkt Alternativen zu den befeuerten Spaltreaktoren entwickelt, in denen die für die Ammoniakspaltung benötigte Reaktionsenthalpie durch elektrische Beheizung bereitgestellt wird. Hierdurch ist es aber nicht mehr möglich, den Heizwert des Restgases innerhalb des Prozesses sinnvoll zu nutzen.

### Übersicht

Vor diesem Hintergrund werden ein Verfahren zur Gewinnung eines Wasserstoffprodukts unter Verwendung von Ammoniak und eine Anlage zur Durchführung des Verfahrens mit den Merkmalen der unabhängigen Ansprüche vorgeschlagen. Ausgestaltungen sind jeweils Gegenstand der abhängigen Ansprüche und der nachfolgenden Beschreibung.

Das vorgeschlagene Verfahren zur Gewinnung eines Wasserstoffprodukts unter Verwendung von Ammoniak umfasst ein Bereitstellen eines Spaltgaseses unter Verwendung einer elektrisch beheizten, mit Ammoniak gespeisten katalytischen Reaktoranordnung, wobei das Spaltgas Wasserstoff und Stickstoff enthält, und ein Trennen des Spaltgases oder eines Teils hiervon unter Verwendung einer Druckwechseladsorptionsanordnung, wobei ein erstes Trennprodukt und ein zweites Trennprodukt erhalten werden, wobei das erste Trennprodukt einen höheren Wasserstoffgehalt und einen geringeren Stickstoffgehalt und das zweite Trennprodukt einen geringeren Wasserstoffgehalt und einen höheren Stickstoffgehalt als das Spaltgas aufweist. Das Spaltgas kann insbesondere auch nicht umgesetzten Ammoniak enthalten, der in hier vorgeschlagenen Ausgestaltungen in das Verfahren zurückgeführt werden kann.

Das vorgeschlagene Verfahren umfasst ferner ein Trennen des zweiten Trennprodukts oder eines Teils hiervon unter Verwendung einer Membrantrennanordnung, wobei ein drittes Trennprodukt und ein oder mehrere vierte Trennprodukte erhalten werden, wobei das dritte Trennprodukt einen geringeren Wasserstoffgehalt und einen höheren Stickstoffgehalt und das eine oder die mehreren vierten Trennprodukte einen höheren Wasserstoffgehalt und einen geringeren Stickstoffgehalt als das zweite Trennprodukt aufweist oder aufweisen, und ein Bilden eines Rückführstroms unter Verwendung des einen oder der mehreren vierten Trennprodukte oder eines oder mehrerer Teile hiervon, sowie ein Rückführen des Rückführstroms in das Verfahren.

In Anlagen zur Ammoniakspaltung wird ein Spaltgas erhalten, das Stickstoff und Wasserstoff enthält. Hieraus kann ein Wasserstoffprodukt beispielsweise mittels Druckwechseladsorption in hoher Reinheit gewonnen werden. Es verbleibt ein sogenanntes Rest- oder Tailgas, das in herkömmlichen, mit Brenngas befeuerten Anlagen zur Ammoniakspaltung zur Unterfeuerung verwendet werden kann. Diese vorteilhafte Nutzung entfällt in elektrisch beheizten Anlagen herkömmlicher Art.

Die hier vorgeschlagenen Ausgestaltungen ermöglichen eine Nutzung in besonders vorteilhafter Weise. Zusätzlich ermöglichen die vorgeschlagenen prozesstechnischen Varianten die Rückgewinnung des im Tailgas enthaltenen Wasserstoffs für eine stoffliche Verwertung, wobei das Tailgas hier als "zweites Trennprodukt" bezeichnet wird. Die Wasserstoffausbeute gegenüber einer befeuerten Anlage zur Ammoniakspaltung lässt sich dabei um mehr als 10% erhöhen.

Das Tailgas bzw. zweite Trennprodukt wird in dem vorgeschlagenen Verfahren der Membrantrenneinrichtung zugeführt. Der Wasserstoff landet im Permeat derselben, einem hier als "viertes Trennprodukt" bezeichneten Komponentengemisch, und kann vor die Druckwechseladsorption zurückgeführt werden. Hierdurch kann der enthaltene Wasserstoff in das Wasserstoffprodukt überführt werden. Der Stickstoff bleibt im Retentat und kann aus dem Verfahren ausgeschleust werden.

Das vorgeschlagene Verfahren zeigt insgesamt eine energetisch effiziente Erhöhung der Wasserstoffausbeute in einer Anlage zur Ammoniakspaltung mit elektrischer Beheizung.

In einer Ausgestaltung des Verfahrens ist vorgesehen, dass das zweite Trennprodukt oder ein Teil hiervon unter Verwendung einer Verdichtungseinrichtung verdichtet wird, das dritte Trennprodukt oder ein Teil hiervon unter Verwendung einer Entspannungseinrichtung entspannt wird, und die Verdichtungseinrichtung mechanisch mit der Entspannungseinrichtung gekoppelt ist.

In einer derartigen Ausgestaltung kann das für die Membrantrennanordnung erforderliche Druckniveau in vorteilhafter Weise und insbesondere mit minimiertem Energieaufwand bereitgestellt werden.

In einer Ausgestaltung des Verfahrens ist vorgesehen, dass das Bilden des Rückführstroms ein Trennen des vierten Trennprodukts, zumindest eines der mehreren vierten Trennprodukte oder eines oder mehrerer Teile hiervon unter Verwendung einer weiteren Druckwechseladsorptionsanordnung umfasst, wobei ein fünftes Trennprodukt und ein sechstes Trennprodukt erhalten werden, wobei das fünfte Trennprodukt einen höheren Wasserstoffgehalt und einen geringeren Stickstoffgehalt und das sechste Trennprodukt einen geringeren Wasserstoffgehalt und einen höheren Stickstoffgehalt als das eine oder die mehreren vierten Trennprodukte aufweist, und wobei das sechste Trennprodukt oder ein Teil hiervon in einer derartigen Ausgestaltung als der Rückführstrom verwendet wird.

Mit anderen Worten kann hier das Permeat der Membrantrennanordnung optional in einem zusätzlichen Verdichter auf z.B. Produktdruck komprimiert und in der weiteren Druckwechseladsorptionsanordnung auf Produktqualität aufgereinigt werden. Das Rest- bzw. Tailgas der weiteren Druckwechseladsorption, das "sechste Trennprodukt" kann anschließend zum Tailgas der ersten Druckwechseladsorption, dem "zweiten Trennprodukt" vor die Membrantrenneinrichtung gefahren werden. Diese Ausgestaltung ermöglicht die Bereitstellung eines zusätzlichen Wasserstoffprodukts mit gleichen Bedingungen wie das Hauptwasserstoffprodukt. Bei niedrigeren Reinheits- bzw. Druckanforderungen kann der Prozess mittels einer entsprechenden Ausgestaltung apparativ und energetisch vereinfacht werden.

In einer alternativen Ausgestaltung des Verfahrens ist vorgesehen, dass das Bilden des Rückführstroms ein Umsetzen des vierten Trennprodukts, zumindest eines der mehreren vierten Trennprodukte oder eines oder mehrerer Teile hiervon unter Verwendung einer Brennstoffzellenanordnung umfasst, wobei ein Brennstoffzellenabgas erhalten wird, und wobei das Brennstoffzellenabgas oder ein Teil hiervon als der Rückführstrom verwendet wird.

Das Permeat der Membrantrennanordnung (ein Wasserstoffstrom bzw. das "vierte Trennprodukt") wird in entsprechenden Ausgestaltungen also in eine Brennstoffzelle geleitet. Die Brennstoffzelle setzt einen Teil des Wasserstoffs in Wasser und elektrische Energie um. Das Brennstoffzellenabgas kann wiederum zur Nutzung von Restwasserstoffmengen zurückgeführt werden. Das enthaltene Wasser kann dabei zumindest teilweise auskondensiert und abgeführt werden.

In einer entsprechenden Ausgestaltung des Verfahrens kann also vorgesehen sein, dass das Brennstoffzellenabgas oder der erwähnte Teil hiervon einer Kühlung und Wasserabtrennung unterworfen wird, bevor dieses zur Bildung des Rückführstroms verwendet wird.

In einer nochmals alternativen Ausgestaltung des Verfahrens ist vorgesehen, dass die Membrantrennanordnung mehrere Membrantrennstufen umfasst, wobei mehrere Permeatströme als vierte Trennprodukte gebildet werden.

Man verwendet in einer entsprechenden Ausgestaltung also eine zwei- oder mehrstufige Membran, wobei das Permeat der ersten Stufe auf einem höheren Druck vorliegt und zusammen mit dem Permeat der zweiten und folgender Stufen (als "vierte Trennprodukte") in das Einsatzgas zur Druckwechseladsorption verdichtet werden kann. Das Retentat (fast reiner Stickstoff, das "dritte Trennprodukt") kann entspannt und optional in einer Wasserstoffeliminationsanordnung von Spuren von Wasserstoff gereinigt werden.

Falls nötig, können in allen Ausgestaltungen stromauf der Membrantrenneinrichtung noch eine Säure- oder Wasserwäsche installiert werden, um Spuren unkonvertierten Ammoniaks zu beseitigen. Solcher Ammoniak kann anschließend aus dem Waschwasser geflasht oder mittels eines kleinen Wasserstoffstroms ausgetrieben werden und stromauf der Ammoniakspaltung zurückgeführt werden.

Das vorgeschlagene Verfahren zeigt in den soeben vorgestellten Varianten eine energetisch effiziente Erhöhung der Wasserstoffausbeute in einer elektrisch betriebenen Anlage zur Ammoniakspaltung durch den Einsatz einer Expander-Booster Kombination (Verdichtungsanordnung und Expansionsanordnung) mit einer zwischengeschalteten Membran, die einen fast reinen Stickstoffstrom erzeugt und die Rückführung und Rückgewinnung des Großteils des Wasserstoffs ermöglicht.

In einer Ausgestaltung des Verfahrens ist vorgesehen, dass die Rückführung des Rückführstroms stromab der Reaktoranordnung und stromauf der Druckwechseladsorptionsanordnung und/oder stromab der Druckwechseladsorptionsanordnung und stromauf der Membrantrennanordnung erfolgt. Die Rückführung kann jeweils an zweckmäßiger Stelle, beispielsweise in eine Zwischenstufe der Verdichteranordnung, oder stromauf dieser, erfolgen.

In einer Ausgestaltung des Verfahrens ist vorgesehen, dass das dritte Trennprodukt Wasserstoff enthält, wobei das dritte Trennprodukt oder ein Teil hiervon einer Wasserstoffelimination zugeführt wird. Diese kann beispielsweise eine katalytische Umsetzung zu Wasser umfassen, so dass an die Atmosphäre abgegebene Gase keine Komponenten enthalten, die nicht bereits natürlich in der Luft enthalten sind.

In einer Ausgestaltung des Verfahrens ist vorgesehen, dass das Bereitstellen eines Spaltgases unter Verwendung der elektrisch beheizten, mit Ammoniak gespeisten katalytischen Reaktoranordnung eine Zwischenspeicherung des Reaktionseinsatzes, eine Verdampfung des Reaktionseinsatzes, eine Überhitzung des Reaktionseinsatzes und eine Kühlung des Spaltgases umfasst.

Die vorgeschlagene Anlage zur Gewinnung eines Wasserstoffprodukts unter Verwendung von Ammoniak ist zum Bereitstellen eines Spaltgases unter Verwendung einer elektrisch beheizten, mit Ammoniak gespeisten katalytischen Reaktoranordnung, wobei das Spaltgas Wasserstoff und Stickstoff enthält;
Zum Trennen des Spaltgases oder eines Teils hiervon unter Verwendung einer Druckwechseladsorptionsanordnung, wobei ein erstes Trennprodukt und ein zweites Trennprodukt erhalten werden, wobei das erste Trennprodukt einen höheren Wasserstoffgehalt und einen geringeren Stickstoffgehalt und das zweite Trennprodukt einen geringeren Wasserstoffgehalt und einen höheren Stickstoffgehalt als das erste Komponentengemisch aufweist, zum Trennen des zweiten Trennprodukts oder eines Teils hiervon unter Verwendung einer Membrantrennanordnung, wobei ein drittes Trennprodukt und ein oder mehrere vierte Trennprodukte erhalten werden, wobei das dritte Trennprodukt einen geringeren Wasserstoffgehalt und einen höheren Stickstoffgehalt und das eine oder die mehreren vierten Trennprodukte einen höheren Wasserstoffgehalt und einen geringeren Stickstoffgehalt als das zweite Trennprodukt aufweist oder aufweisen, und zum Bilden eines Rückführstroms unter Verwendung des einen oder der mehreren vierten Trennprodukte oder eines oder mehrerer Teile hiervon, und zum Rückführen des Rückführstroms in das Verfahren eingerichtet.

Zu weiteren Merkmalen und Vorteilen einer entsprechenden Anlage und Ausgestaltungen hiervon sei auf die obigen Erläuterungen betreffend das erfindungsgemäß vorgeschlagene Verfahren und seine Ausgestaltungen ausdrücklich verwiesen, da diese hierfür in gleicher Weise gelten.

Entsprechendes gilt auch für eine Anlage, die gemäß einer Ausgestaltung der Erfindung dazu eingerichtet ist, ein Verfahren gemäß einer beliebigen Ausgestaltung der vorliegenden Erfindung durchzuführen.

### Zeichnungen

Ausführungsformen von hier vorgeschlagenen Lösungen werden nachfolgend rein beispielhaft unter Bezugnahme auf die beigefügte Zeichnung beschrieben, wobei
Figur 1 ein Verfahren zur Ammoniakspaltung veranschaulicht;
Figur 2 ein Verfahren zur Ammoniakspaltung veranschaulicht; und
Figur 3 ein Verfahren zur Ammoniakspaltung veranschaulicht.

### Ausführungsformen

Die nachfolgend beschriebenen Ausführungsformen und Ausgestaltungen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale vorgeschlagener Verfahren und Vorrichtungen nicht abschließend und/oder beschränkend betrachtet werden.

Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Ansprüche oder als Beschränkungen von Äquivalenten hierzu zu betrachten sind, und dass andere Ausführungsformen verwendet und Änderungen vorgenommen werden können, ohne vom Umfang der Ansprüche abzuweichen.

Unterschiedliche Ausführungsformen können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht spezifisch beschrieben sind. Darüber hinaus können andere Ausgestaltungen umfasst sein, die gegenwärtig nicht beansprucht sind, die aber in Zukunft beansprucht werden könnten, insbesondere wenn sie vom Umfang der unabhängigen Ansprüche umfasst sind.

Erläuterungen, die sich auf Vorrichtungen, Apparate, Anordnungen, Systeme usw. gemäß vorgeschlagenen Ausführungsformen beziehen, können auch für Verfahren, Prozesse, Methoden usw. gemäß anderen Ausführungsformen gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

Die vorstehenden und nachfolgenden Erläuterungen und Definitionen können für alle oder einen Teil der hier vorgestellten Ausgestaltungen gelten, und die Erläuterung bestimmter Aspekte im Zusammenhang mit nur einem Teil oder einer der Ausgestaltungen soll keineswegs dahingehend verstanden werden, dass diese Aspekte nicht auch mit anderen oder allen Ausgestaltungen, soweit technisch möglich und sinnvoll, verwirklicht sein können.

Flüssige und gasförmige Stoffströme, Gasgemische oder dergleichen können im hier verwendeten Sprachgebrauch "reich" oder "arm" an einer oder mehreren Komponenten sein, wobei "reich" für einen Gehalt von wenigstens 50%, 75%, 90%, 95%, 99%, 99,5%, 99,9% oder 99,99% und "arm" für einen Gehalt von höchstens 50%, 25%, 10%, 5%, 1 %, 0,1% oder 0,01% auf molarer, Gewichts- oder Volumenbasis stehen kann.

Flüssige und gasförmige Stoffströme, Gasgemische oder dergleichen können im hier verwendeten Sprachgebrauch ferner angereichert oder abgereichert an einer oder mehreren Komponenten sein, wobei sich diese Begriffe auf einen Gehalt in einem anderen Stoffstrom beziehen, unter Verwendung dessen der Stoffstrom gebildet wurde. Ein betrachteter Stoffstrom ist dabei "angereichert", wenn er zumindest den 2-fachen, 5-fachen, 10-fachen, 100-fachen oder 1.000-fachen Gehalt der bezeichneten Komponente(n) aufweist, und "abgereichert", wenn er höchstens den 0,5-fachen, 0,1-fachen, 0,01-fachen oder 0,001-fachen Gehalt der bezeichneten Komponente(n) aufweist, jeweils in Bezug auf den Stoffstrom, unter Verwendung dessen der betrachtete Stoffstrom gebildet wurde.

Unter Angaben wie "im Wesentlichen enthaltend" und dergleichen soll hier insbesondere verstanden werden, dass in einer damit beschriebenen Zusammensetzung, einem Stoffstrom usw. neben den als obligatorisch angegebenen bzw. sich aus der Bezeichnung des Gasgemischs (bspw. "Wasserstoff") ergebenden obligatorischen Bestandteilen weitere Komponenten enthalten sein können, sofern sich die wesentlichen Merkmale der damit bezeichneten Zusammensetzung durch diese nicht signifikant ändern. Entsprechendes gilt auch Angaben wie "im Wesentlichen frei von" und dergleichen. Ein "im Wesentlichen" eine oder mehrere Komponenten enthaltendes oder aus diesen bestehendes Gas bzw. Gasgemisch kann insbesondere diese Komponenten zu mehr als 70, 80, 90, 95, 99, 99,9 oder 99,99% in Summe oder als Einzelwerte aufweisen. Umgekehrt ist ein Gas bzw. Gasgemisch "im Wesentlichen frei" von einer oder mehreren Komponenten, wenn es weniger als 20, 10, 5, 1, 0,1 oder 0,01% dieser Komponenten in Summe oder als Einzelwerte enthält.

Immer dann, wenn zuvor und nachfolgend von "Ammoniak" die Rede ist, sei darunter auch sogenannter technischer Ammoniak (engl. Anhydrous Ammonia) verstanden, also Ammoniak geringerer Reinheit, jedoch mit typischerweise mehr als 90% oder 95% Ammoniakgehalt auf Mol-, Gewichts- oder Volumenbasis. Mit "Ammoniak" kann dabei auch ein im soeben erläuterten Sinn "im Wesentlichen" Ammoniak enthaltendes Gemisch verstanden werden.

Verfahren und Anlagen zur Ammoniakspaltung sind bekannt. Beispielsweise kann auf die eingangs zitierte Literatur verwiesen werden. Bei der Ammoniakspaltung sind allgemein erhöhte Reaktionsdrücke bevorzugt, um auf einen stromabwärtigen Produkt- oder Wasserstoffverdichter verzichten zu können

Sämtliche hier verwendeten Prozentangaben können sich auf Mol-, Mengen- oder Volumenanteile beziehen. Druckangaben in bar sind, soweit nicht anders erläutert, insbesondere als Absolutdrücke zu verstehen.

Die Konjunktion "und/oder" soll, wenn in einer Aufzählung vor dem letzten Begriff der Aufzählung verwendet, so verstanden werden, dass alle in der Aufzählung zuvor und danach genannten Begriffe beliebig miteinander kombiniert werden können. Mit anderen Worten ist mit "A, B und/oder C" "A und/oder B und/oder C" oder "wenigstens eines der Elemente A, B und C in beliebiger Kombination" gemeint.

Ist vorliegend von einem "Teil" eines Stoffstroms die Rede, kann es sich hierbei um einen Mengenanteil mit gleicher Zusammensetzung handeln, der von einem Ausgangsstrom lediglich abgezweigt wurde, aber auch um einen Anteil abweichender Zusammensetzung und ggf. nur eine Komponente des Ausgangsstroms, der mittels eines Verfahrens wie Kondensation, Evaporation, Sieden, Destillieren, Rektifizieren, Absorbieren, Absorbieren, Flashen, Membrantrennen, Abscheiden oder dergleichen gebildet wird oder bei einem entsprechenden Schritt als Rest verbleibt. Ein "Teil" kann auch nach einer Kombination beliebiger der vorstehend benannten Schritte vorliegen, beispielsweise nach trenntechnischer Bearbeitung abgezweigten Anteils.

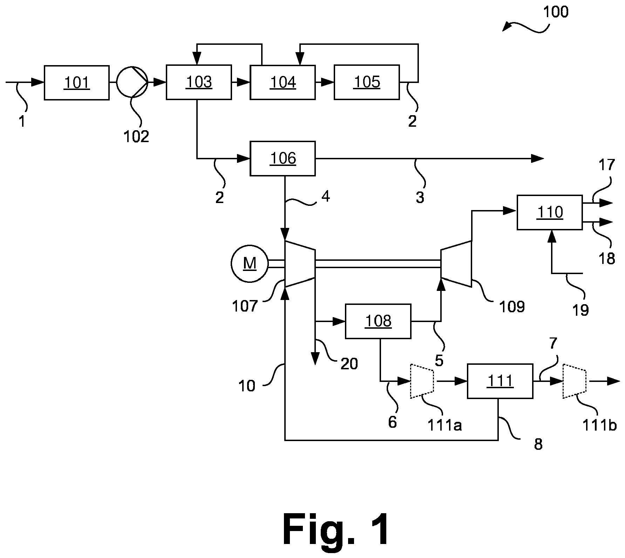

In Figur 1 ist ein Verfahren zur Bereitstellung eines Wasserstoffprodukts aus Ammoniak gemäß einer hier vorgeschlagenen Ausgestaltung veranschaulicht und insgesamt mit 100 bezeichnet.

In dem Verfahren 100 wird ein ammoniakhaltiger Einsatzstrom 1 bereitgestellt, der optional in einer Speichereinheit 101 zwischengespeichert und aus dieser mittels einer Pumpe 102 einer Verdampfung 103 und anschließenden Überhitzung 104 zugeführt werden kann. Anschließend erfolgt eine Umsetzung in einer Reaktoranordnung 105 mit einem oder mehreren katalytischen Reaktoren, aus der ein Spaltgas 2 entnommen werden kann. Das Spaltgas 2 wird für die Überhitzung 104 und die Verdampfung 103 verwendet und dabei abgekühlt.

Nach der Abkühlung wird das Spaltgas 2 einer Druckwechseladsorptionsanordnung 106 zugeführt, wo im hier verwendeten Sprachgebrauch ein "erstes Trennprodukt" 3 und ein "zweites Trennprodukt" 4 gebildet werden. Das erste Trennprodukt 3 kann insbesondere das hier bereitgestellte Wasserstoffprodukt darstellen. Das zweite Trennprodukt 4, das noch gewisse Anteile Wasserstoff und ansonsten überwiegend Stickstoff enthält, wird mittels einer Verdichteranordnung 107 verdichtet und einer Membrantrenneinrichtung 108 zugeführt. In der Membrantrenneinrichtung 108 werden im hier verwendeten Sprachgebrauch ein "drittes Trennprodukt" 5 als Retentat und ein "viertes Trennprodukt" 6 als Permeat gebildet.

Das dritte Trennprodukt 5 ist bereits arm an Wasserstoff und enthält im Wesentlichen Stickstoff. Es kann einer Entspannungseinrichtung 109 und danach optional einer Wasserstoffelimination 110 zugeführt werden, in der ein Restgasstrom 17 und ein Wasserstrom 18 gebildet werden, und der im veranschaulichten Beispiel ein Luftstrom 19 zugeführt wird. Die Entspannungseinrichtung 109 und die Verdichtungseinrichtung können, wie hier veranschaulicht, mechanisch gekoppelt sein, beispielsweise über ein zwischengeschaltetes Getriebe oder über eine gemeinsame Welle. Ein Antrieb, beispielsweise in Form eines Elektromotors M, kann vorgesehen sein. Stromab der Verdichtungseinrichtung 107 kann ebenfalls ein Wasserstrom 20 abgeschieden werden, beispielsweise unter Verwendung hier nicht gesondert veranschaulichter Abscheidebehälter.

Das vierte Trennprodukt 6 wird im in Figur 1 veranschaulichten Beispiel des Verfahrens 100 bei Bedarf einer Verdichtung 111a unterworfen und danach einer weiteren Druckwechseladsorptionseinrichtung 111 zugeführt. Hierin werden im hier verwendeten Sprachgebrauch ein "fünftes Trennprodukt" 7 und ein "sechstes Trennprodukt" 8 gebildet. Ersteres ist wasserstoffreich, kann bei Bedarf in einer Verdichtungseinrichtung 111b verdichtet werden, und kann zur Bereitstellung des Wasserstoffprodukts verwendet werden. Letzteres enthält noch gewisse Mengen Restwasserstoff und ansonsten Stickstoff. Es wird in dem in Figur 1 dargestellten Beispiel zur Bildung eines Rückführstroms 10 verwendet, der zu einer Position stromauf der Membrantrenneinrichtung 108 zurückgeführt, genauer in die Verdichtungseinrichtung 107 eingespeist wird.

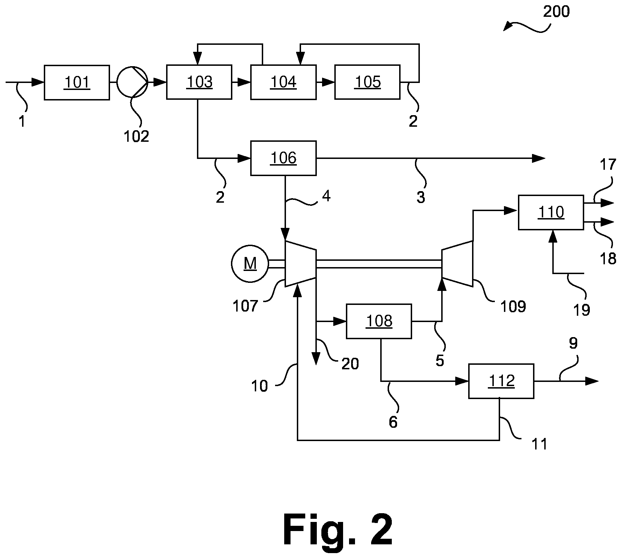

In Figur 2 ist ein Verfahren zur Bereitstellung eines Wasserstoffprodukts aus Ammoniak gemäß einer weiteren, hier vorgeschlagenen Ausgestaltung veranschaulicht und insgesamt mit 200 bezeichnet.

In dem Verfahren 200 wird, abweichend von dem Verfahren 100, das vierte Trennprodukt einer Brennstoffzellenanordnung 112 zugeführt, in der elektrische Energie, wie mit 9 veranschaulicht, und ein Brennstoffzellenabgas 11 gebildet wird. Letzteres enthält Restmengen an Wasserstoff und kann daher vorteilhafterweise ebenfalls zur Bereitstellung eines hier wie zuvor mit 10 bezeichneten Rückführstroms verwendet werden, der in das Verfahren 200 zurückgeführt wird. Im dargestellten Beispiel wird der Rückführstrom der Verdichteranordnung 107 auf einer Zwischenstufe zugeführt.

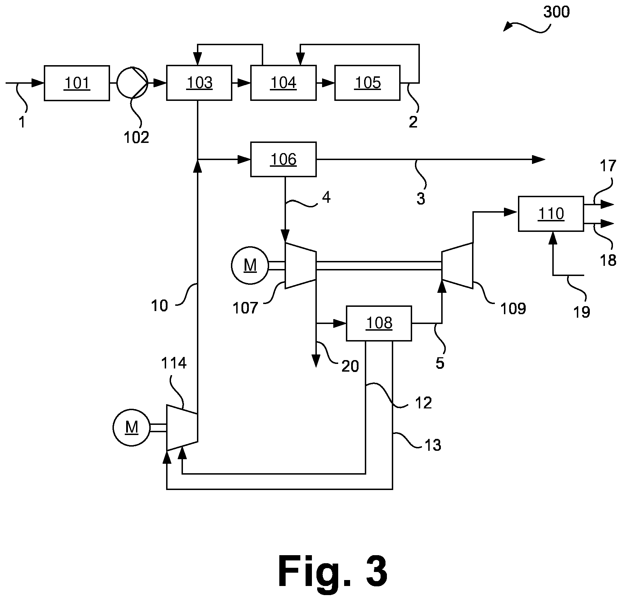

In Figur 3 ist ein Verfahren zur Bereitstellung eines Wasserstoffprodukts aus Ammoniak gemäß einer weiteren, hier vorgeschlagenen Ausgestaltung veranschaulicht und insgesamt mit 300 bezeichnet.

In dem Verfahren 300 umfasst, abweichend von dem Verfahren 100 und 200, die Membrantrennanordnung 108 mindestens zwei Trennstufen, so dass mindestens zwei Permeatströme 12, 13 gebildet werden, also zwei "vierte Trennprodukte" im hier verwendeten Sprachgebrauch. Diese werden in geeigneter Weise mittels einer weiteren Verdichteranordnung 114 verdichtet und zur Bildung des Rückführstroms 10 verwendet, der hier nach stromauf der Druckwechseladsorptionseinrichtung 106 zurückgeführt werden kann.

## Patentansprüche

1. Verfahren (100, 200, 300) zur Gewinnung eines Wasserstoffprodukts (3) unter Verwendung von Ammoniak, das umfasst:
- Bereitstellen eines Spaltgases (2) unter Verwendung einer elektrisch beheizten, mit Ammoniak gespeisten katalytischen Reaktoranordnung (105), wobei das Spaltgas (2) Wasserstoff und Stickstoff enthält;
- Trennen des Spaltgases (2) oder eines Teils hiervon unter Verwendung einer Druckwechseladsorptionsanordnung (106) in ein erstes Trennprodukt (3) und ein zweites Trennprodukt (4), wobei das erste Trennprodukt (3) einen höheren Wasserstoffgehalt und einen geringeren Stickstoffgehalt und das zweite Trennprodukt (4) einen geringeren Wasserstoffgehalt und einen höheren Stickstoffgehalt als das Spaltgas (2) aufweist;
- Trennen des zweiten Trennprodukts (4) oder eines Teils hiervon unter Verwendung einer Membrantrennanordnung (108), wobei ein drittes Trennprodukt (5) und ein oder mehrere vierte Trennprodukte (6, 12, 13) erhalten werden, wobei das dritte Trennprodukt (5) einen geringeren Wasserstoffgehalt und einen höheren Stickstoffgehalt und das eine oder die mehreren vierten Trennprodukte (6, 12, 13) einen höheren Wasserstoffgehalt und einen geringeren Stickstoffgehalt als das zweite Trennprodukt (4) aufweist oder aufweisen; und
- Bilden eines Rückführstroms (10) unter Verwendung des einen oder der mehreren vierten Trennprodukte (6, 12, 13) oder eines oder mehrerer Teile hiervon, und Rückführen des Rückführstroms (10) in das Verfahren (100, 200, 300).

2. Verfahren (100, 200, 300) nach Anspruch 1, wobei das zweite Trennprodukt (4) oder der Teil hiervon unter Verwendung einer Verdichtungseinrichtung (107) verdichtet wird, das dritte Trennprodukt (5) oder ein Teil hiervon unter Verwendung einer Entspannungseinrichtung (109) entspannt wird, und die Verdichtungseinrichtung (107) mechanisch mit der Entspannungseinrichtung (109) gekoppelt ist.

3. Verfahren (100) nach Anspruch 1 oder Anspruch 2, wobei das Bilden des Rückführstroms (10) ein Trennen des vierten Trennprodukts (6), zumindest eines der mehreren vierten Trennprodukte (12, 13) oder eines oder mehrerer Teile hiervon unter Verwendung einer weiteren Druckwechseladsorptionsanordnung (111) umfasst, wobei ein fünftes Trennprodukt (7) und ein sechstes Trennprodukt (8) erhalten werden, wobei das fünfte Trennprodukt (7) einen höheren Wasserstoffgehalt und einen geringeren Stickstoffgehalt und das sechste Trennprodukt (8) einen geringeren Wasserstoffgehalt und einen höheren Stickstoffgehalt als das eine oder die mehreren vierten Trennprodukte (6) aufweist, und wobei das sechste Trennprodukt (8) oder ein Teil hiervon als der Rückführstrom (10) verwendet wird.

4. Verfahren (200) nach Anspruch 1 oder Anspruch 2, wobei das Bilden des Rückführstroms (10) ein Umsetzen des vierten Trennprodukts (6), zumindest eines der mehreren vierten Trennprodukte (12, 13) oder eines oder mehrerer Teile hiervon unter Verwendung einer Brennstoffzellenanordnung (112) umfasst, wobei ein Brennstoffzellenabgas (11) erhalten wird, und wobei das Brennstoffzellenabgas (11) oder ein Teil hiervon als der Rückführstrom (10) verwendet wird.

5. Verfahren (200) nach Anspruch 4, bei dem das Brennstoffzellenabgas (11) oder der Teil hiervon einer Wasserabtrennung unterworfen wird, bevor dieses zur Bildung des Rückführstroms (10) verwendet wird

6. Verfahren (300) nach Anspruch 1 oder Anspruch 2, wobei die Membrantrennanordnung (108) mehrere Membrantrennstufen umfasst, wobei mehrere Permeatströme als vierte Trennprodukte (12, 13) gebildet werden.

7. Verfahren (100, 200, 300) nach einem der vorstehenden Ansprüche, wobei die Rückführung des Rückführstroms (10) stromab der Reaktoranordnung (105) und stromauf der Druckwechseladsorptionsanordnung (106) und/oder stromab der Druckwechseladsorptionsanordnung (106) und stromauf der Membrantrennanordnung (108) erfolgt.

8. Verfahren (100, 200, 300) nach einem der vorstehenden Ansprüche, bei dem das dritte Trennprodukt (5) Restwasserstoff enthält, wobei das dritte Trennprodukt (5) oder ein Teil hiervon einer Wasserstoffelimination (110) zugeführt wird.

9. Verfahren (100, 200, 300) nach einem der vorstehenden Ansprüche, bei dem das Bereitstellen eines Spaltgases (2) unter Verwendung der elektrisch beheizten, mit Ammoniak gespeisten katalytischen Reaktoranordnung (105) eine Zwischenspeicherung (101) des Reaktionseinsatzes (1), eine Verdampfung (102) des Reaktionseinsatzes (1), eine Überhitzung (104) des Reaktionseinsatzes (1) und eine Kühlung des Spaltgases (2) umfasst.

10. Anlage zur Gewinnung eines Wasserstoffprodukts (3) unter Verwendung von Ammoniak, die zur Durchführung folgender Schritte eingerichtet ist:
Bereitstellen eines Spaltgases (2) unter Verwendung einer elektrisch beheizten, mit Ammoniak gespeisten katalytischen Reaktoranordnung (105), wobei das Spaltgas (2) Wasserstoff und Stickstoff enthält;
Trennen des Spaltgases (2) oder eines Teils hiervon unter Verwendung einer Druckwechseladsorptionsanordnung (106), wobei ein erstes Trennprodukt (3) und ein zweites Trennprodukt (4) erhalten werden, wobei das erste Trennprodukt (3) einen höheren Wasserstoffgehalt und einen geringeren Stickstoffgehalt und das zweite Trennprodukt (4) einen geringeren Wasserstoffgehalt und einen höheren Stickstoffgehalt als das erste Komponentengemisch (2) aufweist;
Trennen des zweiten Trennprodukts (4) oder eines Teils hiervon unter Verwendung einer Membrantrennanordnung (108), wobei ein drittes Trennprodukt (5) und ein oder mehrere vierte Trennprodukte (6, 12, 13) erhalten werden, wobei das dritte Trennprodukt (5) einen geringeren Wasserstoffgehalt und einen höheren Stickstoffgehalt und das eine oder die mehreren vierten Trennprodukte (6, 12, 13) einen höheren Wasserstoffgehalt und einen geringeren Stickstoffgehalt als das zweite Trennprodukt (4) aufweist oder aufweisen; und
Bilden eines Rückführstroms (10) unter Verwendung des einen oder der mehreren vierten Trennprodukte (6, 12, 13) oder eines oder mehrerer Teile hiervon, und Rückführen des Rückführstroms (10) in das Verfahren (100, 200, 300).

11. Anlage nach Anspruch 10, die zur Durchführung eines Verfahrens nach einem der Ansprüche 1 bis 9 eingerichtet ist.
